# EUROPEAN PATENT SPECIFICATION

(11) **EP 1 772 181 B1**
(45) Date of publication and mention of the grant of the patent: **03.02.2010**
(21) Application number: 06019902.3
(22) Date of filing: 22.09.2006
(51) Int. Cl.: B01D 53/04, B01D 39/20

(54) **Filter for air cleaning and method for manufacturing the same**
Filter zur Luftreinigung und Verfahren zu dessen Herstellung
Filtre d'epuration de l'air et son procédé de fabrication

(30) Priority: 06.10.2005 JP 2005293671
(43) Date of publication of application: 11.04.2007
(73) Proprietor: Sanden Corporation, Isesaki-shi, Gunma 372-8502 (JP); Grafton Laboratories Inc., Minato-ku Tokyo 107-0052 (JP)
(72) Inventor: Imafuji, Tomohisa, Isesaki-shi Gunma, 372-8502 (JP); Fujiki, Tetsumaru, Yokohama-shi Kanagawa, 235-0016 (JP); Ohkawara, Tadayoshi, Maebashi-shi Gunma, 371-0746 (JP); Otsuka, Ichiro, Katsushika-Ku Tokyo, 124-0025 (JP)
(74) Representative: Oser, Andreas

(56) References cited:
- EP-A- 1 247 558
- WO-A-00/10687
- WO-A2-01/85308
- JP-A- 10 230 118
- JP-A- 2001 145 816
- US-A- 5 783 608

## Description

The present invention relates to a filter for air cleaning which adsorbs suspended substances in atmosphere such as a volatile organic compound (hereinafter, also referred to as "VOC") suspended in atmosphere and a method for manufacturing the same, and specifically, to a filter for air cleaning suitable for use in an air conditioning system for vehicles and a method for manufacturing the same.

Recently, in the industrial field for vehicles, a requirement for improving the comfortableness in a vehicle interior has been increased, and for example, the attachment of a filter for air cleaning to an air conditioning system for a vehicle has been promoted for removing VOC and the like suspended in atmosphere.

In such a filter for air cleaning incorporated into an air conditioning system for vehicles, in a case where air is cleaned by adsorbing gas components in atmosphere such as tobacco smelt gas component or automotive exhaust gas component, a filter for air cleaning provided with activated carbon as an adsorbent is generally used. However, such a filter for air cleaning using activated carbon as an adsorbent exhibits an excellent adsorbability for hydrocarbon compounds, but its adsorbability for aldehyde groups, ammonia, etc. is low. Therefore, in order to effectively adsorb and remove aldehyde groups, ammonia, etc., for example, a filter for air cleaning using another adsorbent except activated carbon is used, or a filter for air cleaning is structured by compounding a material exhibiting an excellent cleaning ability for aldehyde groups, ammonia, etc. with activated carbon.

As the filter using an adsorbent except activated carbon, a filter is proposed in JP-A-5-111607 which is manufactured by treating a woven fabric or a nonwoven fabric by graft polymerization in order to effectively decompose ammonia, formaldehyde, etc. However, such a filter is reduced in its ability under a condition of a high-velocity air flow. Further, its ability for treating hydrocarbon compounds is low.

Therefore, an air filter device is proposed in JP-A-10-230118 in which a filter using activated carbon capable of exhibiting an excellent adsorbability for hydrocarbon compounds as an adsorbent and a filter using a graft copolymer are arranged in series in an air flow direction. However, in the filter of such a type, the resistance against air flow may increase remarkably. Further, a filter is also proposed in JP-A-2001-145816 in which a mixture of activated carbon and a graft copolymer is charged into a honeycomb-like base material to form a filtrating material for treating hydrocarbon compounds and a compound of ammonia or an aldehyde group. However, in the structure according to this proposal, because it is difficult to uniformly disperse the activated carbon and the graft copolymer, the treatment ability thereof for hydrocarbon compounds or ammonia, etc. may be reduced.

Accordingly, it would be desirable to provide a high-performance filter for air cleaning which can effectively remove hydrocarbon compounds and ammonia, aldehyde group compounds, etc. in atmosphere simultaneously by a single filter formation, and a method for manufacturing the same.

A filter for air cleaning according to the present invention comprises a filtrating material in which an adsorbent is fixed to a base material by a binder, wherein a graft copolymer is contained in the binder, such that hydrocarbon compounds in the air to be treated can be adsorbed by the adsorbent and the filter can decompose ammonia or aldehyde groups in the air to be treated by the graft copolymer, and wherein said graft copolymer is contained in said binder at a content in a range of 1 wt% to 40 wt% relative to said adsorbent. In such a structure, because the graft copolymer is contained in the binder, it can be fixed, for example, at the time of forming the base material, and therefore, a filtrating material having both of the adsorbent and the graft copolymer can be easily obtained. Therefore, by forming the filter for air cleaning using this filtrating material, the filter can decompose ammonia and aldehyde groups in the air to be treated by the graft copolymer. On the other hand, hydrocarbon compounds in the air to be treated can be adsorbed to, for example, activated carbon used as the adsorbent. Therefore, ammonia, aldehyde groups, etc. and hydrocarbon compounds can be both removed simultaneously, and a high-performance filter for air cleaning capable of surely cleaning air can be realized.

Where, as the adsorbent, except activated carbon, activated carbon fibers, zeolite, activated clay, sepiolite, alumina, silica gel, alumina-silica, etc. can be used. Activated carbon is most preferable from the viewpoints of its performance, easiness of availability on the market, variety on selection, stability in material quality, safety, cost, etc.

Further, as the binder, acrylic-group emulsion type binder such as one containing acrylic ester or methacrylic ester, rubber-group latex type binder such as one containing SBR (styrene-butadiene rubber) or chloroprene rubber, and other type binders such as urethane-group binder can be used.

Further, in a method for manufacturing a filter for air cleaning according to the present invention, the filter comprises a filtrating material formed by fixing an adsorbent to a base material by a binder, and the method is **characterized in that**, after a graft copolymer is contained in the binder, the adsorbent is fixed to the base material using the binder containing the graft copolymer.

The content of the above-described graft copolymer is in a range of 1 wt% to 40 wt% relative to the adsorbent. If the content is less than 1 wt%, there is a fear that ammonia and aldehyde groups in the air to be treated can not be decomposed and removed enough. If the content is more than 40 wt%, because the content of the adsorbent such as activated carbon decreases relatively, there is a fear that hydrocarbon compounds in the air to be treated can not be adsorbed enough.

The amount of the adsorbent fixed to the base material is preferably in a range of 10 g/m² to 300 g/m². If the amount is less than 10 g/m², there is a fear that the removal of hydrocarbon compounds adsorbed by the adsorbent becomes insufficient. On the other hand, if the amount is more than 300 g/m², because the amount of the graft copolymer decreases relatively, there is a fear causing a reduction of the treatment ability for ammonia and aldehyde groups and an increase of pressure loss.

Although the adsorbent is not particularly limited as long as it has an absorbability for hydrocarbon compounds, as the adsorbent, for example, a nonwoven fabric, a woven fabric, a foamed material, etc. can be raised, and in particular, a nonwoven fabric is preferably employed.

The nonwoven fabric may be produced by chemical bonding. For the production of the filter, for example, a method wherein the activated carbon provided as the adsorbent is fixed to the nonwoven fabric provided as the base material via a step of soaking a fleece mixed with the activated carbon into the binder containing the graft copolymer, or a method wherein the activated carbon provided as the adsorbent is fixed to the nonwoven fabric provided as the base material via a step of applying the binder containing the graft copolymer to a fleece mixed with the activated carbon, may be employed.

The filtrating material used for the filter for air cleaning according to the present invention is preferably formed, for example, in a wavy shape. In such a structure, because the surface area of the filter can be ensured wide, the air cleaning performance of the filter may be increased.

In the filter for air cleaning according to the present invention, it is preferred that the graft copolymer is prepared by polymerizing a functional group of H₂NCH₂CH₂NH₂ to a base polymer as a side chain of the graft copolymer. By such a functional group, for example, formaldehyde (HCHO) is decomposed as follows.

R(CH₂CH₂NH₂)-NH₂ + HCHO → R(CH₂CH₂NH₂)-N=CH₂ + H₂O

Where, R indicates a base polymer.

The filter for air cleaning according to the present invention may be used as a filter for air cleaning for air conditioning units installed in houses, factories, etc., and in particular, it is suitable as a filter for air cleaning used for an air conditioning system for vehicles.

Thus, in the filter for air cleaning according to the present invention, since all of hydrocarbon compounds, ammonia and aldehyde-group compounds can be effectively removed by a single filter, air to be treated can be cleaned very efficiently.

Further features and advantages of the present invention will be understood from the following detailed description of the preferred embodiments of the present invention with reference to the accompanying figures, of which:
Fig. 1 is a perspective view of a filter for air cleaning according to an embodiment of the present invention.
Fig. 2 is an enlarged cross-sectional view of the filter depicted in Fig. 1.
Fig. 3 is an enlarged sectional view of a portion A of the filter depicted in Fig. 2.
Fig. 4 is a schematic view of an apparatus used for manufacturing a filter for air cleaning according to an embodiment of the present invention by a chemical bonding method (soaking method).
Fig. 5 is a schematic view of an apparatus used for manufacturing a filter for air cleaning according to an embodiment of the present invention by a chemical bonding method (spraying method).
Fig. 6 is a diagram showing the relationship between an amount of charged activated carbon and a pressure loss of a filtrating material.
Fig. 7 is a comparison diagram showing the removal rates of formaldehyde and toluene in Example 3 and Comparative Examples 1 and 2.

Hereinafter, the desirable embodiments of the filter for air cleaning and the method for manufacturing it according to the present invention will be explained referring to figures.

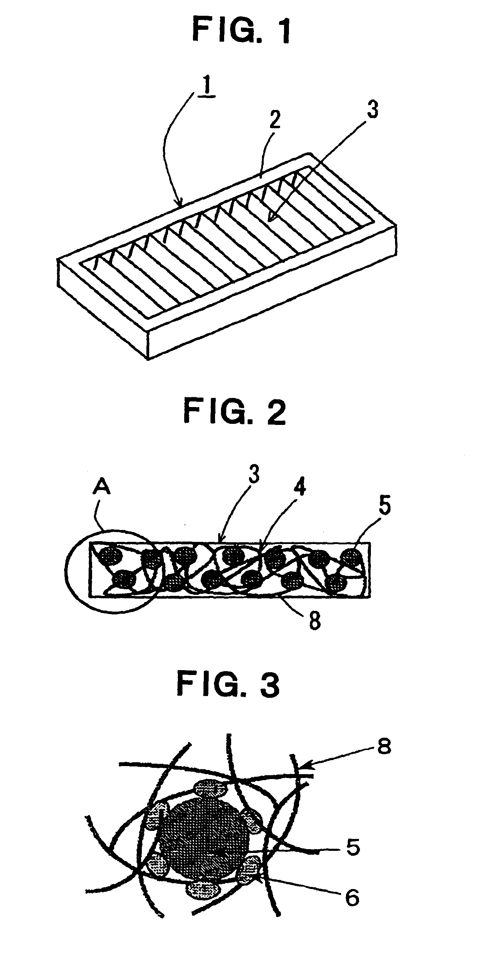

Figs. 1 to 3 depict a filter for air cleaning according to an embodiment of the present invention. In Fig. 1, symbol 1 indicates a filter for air cleaning, and the filter for air cleaning 1 comprises a frame 2 and a filtrating material 3. In this embodiment, the filter for air cleaning 1 is formed as a filter for air cleaning used for an air conditioning system for vehicles. The filtrating material 3 is formed in a wavy shape.

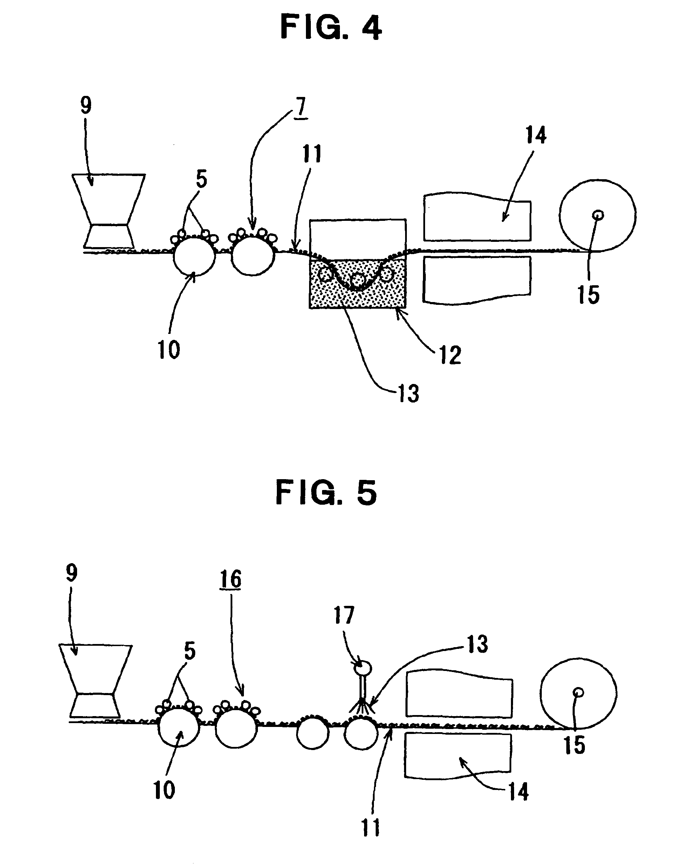

As shown in Figs. 2 and 3, filtrating material 3 has a base material 4 made of a nonwoven fabric, and to the base material 4, activated carbon 5 provided as an adsorbent and graft copolymer 6 are fixed by a binder. In this embodiment, the nonwoven fabric forming the base material 4 is formed by short fibers 8. Such a filtrating material 3 can be easily produced by a chemical bonding method as shown in Fig. 4 or 5. In this filtrating material 3, the amount of activated carbon 5 is set in a range of 10 g/m² to 300 g/m², and the content of graft copolymer 6 is set in a range of 1 wt% to 40 wt% relative to the activated carbon 5.

In this embodiment, as the graft copolymer 6, a graft copolymer, prepared by polymerizing a functional group of H₂NCH₂CH₂NH₂ to a base polymer of the copolymer as a side chain of the graft copolymer, is used. By this functional group, for example, formaldehyde (HCHO) is decomposed as shown in the following reaction formula.

R(CH₂CH₂NH₂)-NH₂ + HCHO → R(CH₂CH₂NH₂)-N=CH₂ + H₂O

Where, R indicates a base polymer which becomes a main component of the copolymer.

Fig. 4 shows an apparatus used for producing the filtrating material 3 by a chemical bonding method (soaking method). In Fig. 4, a production apparatus 7 includes a supply means 9 for supplying short fibers 8 (in this embodiment, the length of the short fibers is 6 mm or less). Short fibers 8 containing activated carbon 5 (particle diameter: for example, 50µm) are supplied from the supply means 9 to a carding machine 10, and at the carding machine 10, a fleece 11 of the short fibers 8 mixed with the activated carbon 5 is formed. Where, the content of activated carbon 5 is set so as to become a content in a range of 10 g/m² to 300 g/m² in a completed filtrating material 3. The fleece 11 is soaked into a binder containing graft copolymer 13 which is prepared by containing a graft copolymer in a binder and which is stored in a binder bath 12, and thereafter, it is treated by a heating/drying means 14, and the dried fleece is wound by a winding roller 15 as a roll of the nonwoven fabric for forming the filtrating material 3. In this process, the content of graft copolymer 6 contained in the graft copolymer containing binder 13 is set so as to become a content in a range of 1 wt% to 40 wt% relative to the amount of activated carbon 5.

Fig. 5 shows an apparatus used for producing the filtrating material 3 by a chemical bonding method (spraying method). In Fig. 5, a production apparatus 16 includes a supply means 9 for supplying short fibers 8 (in this embodiment, the length of the short fibers is 6 mm or less). Short fibers 8 containing activated carbon 5 (particle diameter: for example, 50µm) are supplied from the supply means 9 to a carding machine 10, and at the carding machine 10, a fleece 11 of the short fibers 8 mixed with the activated carbon 5 is formed. Where, the content of activated carbon 5 is set so as to become a content in a range of 10 g/m² to 300 g/m² in a completed filtrating material 3. After a graft copolymer containing binder 13, which is prepared by containing a graft copolymer in a binder, is applied to the fleece 11 by a binder spraying means 17, the fleece 11 is treated by a heating/drying means 14, and the dried fleece is wound by a winding roller 15 as a roll of the nonwoven fabric for forming the filtrating material 3. Also in this process, the content of graft copolymer 6 contained in the graft copolymer containing binder 13 is set so as to become a content in a range of 1 wt% to 40 wt% relative to the amount of activated carbon 5.

In the above-described embodiment, because the graft copolymer 6 is contained in the graft copolymer containing binder 13, a filtrating material 3 having both of activated carbon 5 and the graft copolymer 6 is obtained. Therefore, in the filter using this filtrating material 3, ammonia and aldehyde-group compounds contained in the air to be treated are decomposed by the graft copolymer 6, and hydrocarbon compounds contained in the air is adsorbed by the activated carbon 5 provided as an adsorbent. As a result, both of ammonia, aldehyde-group compounds, etc. and hydrocarbon compounds can be removed by a single filter, and a high-performance filter capable of cleaning air surely and efficiently can be realized.

Further, in the embodiment, because the content of graft copolymer 6 is in a range of 1 wt% to 40 wt% relative to the amount of activated carbon 5 provided as an adsorbent and the activated carbon 5 and the graft copolymer 6 are compounded at a good balance, ammonia and aldehyde-group compounds in the air can be decomposed and removed sufficiently, and at the same time, hydrocarbon compounds can be adsorbed and removed sufficiently. Furthermore, because the amount of activated carbon 5 provided as an adsorbent is in a range of 10 g/m² to 300 g/m² and it is an adequate amount, the activated carbon 5 substantially does not cause a reduction of treatment ability for ammonia and aldehyde-group compounds and an increase of pressure loss.

### Examples:

Hereinafter, the present invention will be explained referring examples and comparative examples. In these examples, acrylic-group emulsion type binder ("Boncoat" AB-901, produced by Dainippon Ink Corporation) was used as the binder to be contained with the graft copolymer.

### Example 1:

Activated carbon (particle diameter: 50µm) was mixed with short fibers (fiber length: 6 mm or less) prepared for forming a nonwoven fabric as a base material of a filtrating material so that the amount of the activated carbon became 75 g/m² in the filtrating material, a filtrating material having a thickness of 0.5 to 2.0 mm was made by the chemical bonding method (soaking method) using the graft copolymer containing binder so that the content of the graft copolymer became 0.5 wt% relative to the amount of the activated carbon, and a filter for air cleaning was manufactured using this filtrating material.

### Example 2:

A filter for air cleaning was manufactured using a filtrating material in a manner similar to than in Example 1 other than a condition where the content of the graft copolymer was set at 1.0 wt% relative to the amount of the activated carbon.

### Example 3:

A filter for air cleaning was manufactured using a filtrating material in a manner similar to than in Example 1 other than a condition where the content of the graft copolymer was set at 10 wt% relative to the amount of the activated carbon.

### Example 4:

A filter for air cleaning was manufactured using a filtrating material in a manner similar to than in Example 1 other than a condition where the content of the graft copolymer was set at 20 wt% relative to the amount of the activated carbon.

### Example 5:

A filter for air cleaning was manufactured using a filtrating material in a manner similar to than in Example 1 other than a condition where the content of the graft copolymer was set at 40 wt% relative to the amount of the activated carbon.

### Example 6:

A filter for air cleaning was manufactured using a filtrating material in a manner similar to than in Example 1 other than a condition where the content of the graft copolymer was set at 60 wt% relative to the amount of the activated carbon.

### Comparative Example 1:

Activated carbon (particle diameter: 50µm) was mixed with short fibers (fiber length: 6 mm or less) prepared for forming a nonwoven fabric as a base material of a filtrating material so that the amount of the activated carbon became 75 g/m² in the filtrating material, a filtrating material having a thickness of 0.5 to 2.0 mm was made by the chemical bonding method (soaking method) without containing a graft copolymer, and a filter for air cleaning was manufactured using this filtrating material.

### Comparative Example 2:

Activated carbon (particle diameter: 50µm) was mixed with short fibers (fiber length: 6 mm or less) prepared for forming a nonwoven fabric as a base material of a filtrating material so that the amount of the activated carbon became 65 g/m² in the filtrating material, a filtrating material A having a thickness of 0.5 to 2.0 mm was made by the chemical bonding method (soaking method). On the other hand, a filtrating material B was made by directly graft treating a nonwoven fabric having a thickness of 0.5 to 2.0 mm and containing a graft copolymer in the filtrating material at a content of 15 wt% relative to the amount of activated carbon contained in the filtrating material A. The filtrating material A and the filtrating material B were laminated to manufacture a filter for air cleaning.

Table 1 shows the contents of graft copolymer, the decomposed amounts of formaldehyde (HOCHO), the contents of activated carbon and the results of evaluation in Examples 1 to 6 and Comparative Examples 1 and 2. In the evaluation, a case remarkably excellent in decomposed amount of formaldehyde as compared with the conventional filter for air cleaning was ranked as ○, a case slightly excellent was ranked as △, and a case equal to the conventional filter was ranked as ×.

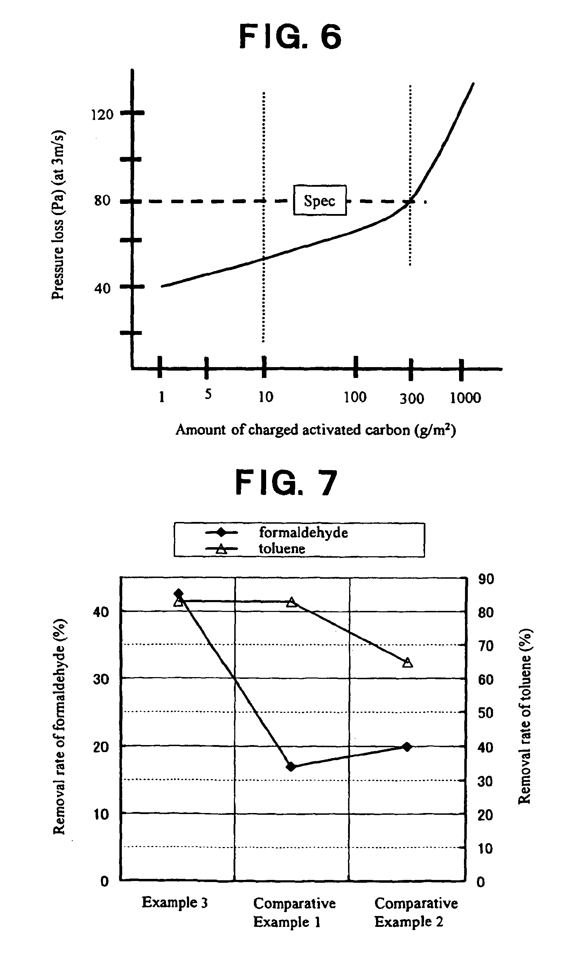

Further, change of pressure loss at an air velocity of 3 m/s of the filtrating material, when the amount of the charged activated carbon in Example 3 was changed, is shown in Fig. 6. Furthermore, comparison of the removal rates of formaldehyde and toluene between Example 3 and Comparative Examples 1 and 2 is shown in Fig. 7.

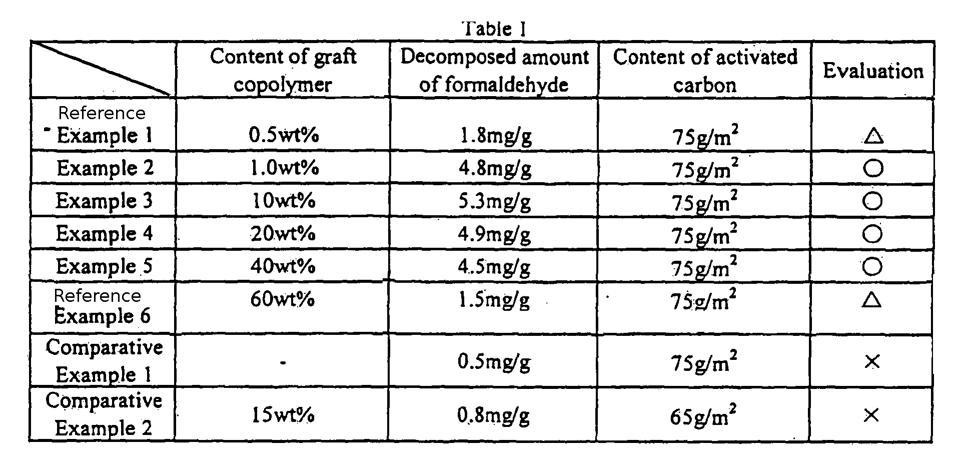

As is evident from Table 1 and Figs. 6 and 7, it is understood that the filter for air cleaning according to the present invention can efficiently remove VOC such as aldehyde-group and hydrocarbon compounds.

## Claims

1. A filter for air cleaning comprising a filtrating material in which an adsorbent is fixed to a base material by a binder, wherein a graft copolymer is contained in said binder, such that hydrocarbon compounds in the air to be treated can be adsorbed by the adsorbent and the filter can decompose ammonia or aldehyde groups in the air to be treated by the graft copolymer, a n d wherein said graft copolymer is contained in said binder at a content in a range of 1 wt% to 40 wt% relative to said adsorbent.

2. The filter for air cleaning according to claim 1, wherein said adsorbent is fixed to said base material at an amount in a range of 10 g/m² to 300 g/m².

3. The filter for air cleaning according to any preceding claim, wherein said adsorbent is an activated carbon,

4. The filter for air cleaning according to any preceding claim, wherein said base material is a nonwoven fabric.

5. The filter for air cleaning according to claim 4, wherein said nonwoven fabric is produced by chemical bonding.

6. The filter for air cleaning according to any preceding claim, wherein said filtrating material is formed in a wavy shape.

7. The filter for air cleaning according to any preceding claim, wherein said graft copolymer contains H₂NCH₂CH₂NH₂ group as a side chain of said graft copolymer.

8. The filter for air cleaning according to any preceding claim, wherein said filter is a filter for air cleaning used for an air conditioning system for vehicles.

9. A method for manufacturing a filter for air cleaning which comprises a filtrating material formed by fixing an adsorbent to a base material by a binder, wherein, after a graft copolymer that can decompose ammonia or aldehyde groups in the air to be treated is contained in said binder, said adsorbent is fixed to said base material using said binder containing said graft copolymer and wherein said graft copolymer is contained in said binder at a content in a range of 1 wt% to 40 wt% relative to said adsorbent.

10. The method for manufacturing a filter for air cleaning according to claim 9, wherein said adsorbent is fixed to said base material at an amount in a range of 10 g/m² to 300 g/m².

11. The method for manufacturing a filter for air cleaning according to claim 9 or 10, wherein said adsorbent is an activated carbon.

12. The method for manufacturing a filter for air cleaning according to any of claims 9 to 11, wherein said base material is a nonwoven fabric.

13. The method for manufacturing a filter for air cleaning according to claim 12, wherein an activated carbon provided as said adsorbent is fixed to said nonwoven fabric provided as said base material via a step of soaking a fleece mixed with said activated carbon into said binder containing said graft copolymer.

14. The method for manufacturing a filter for air cleaning according to claim 12, wherein an activated carbon provided as said adsorbent is fixed to said nonwoven fabric provided as said base material via a step of applying said binder containing said graft copolymer to a fleece mixed with said activated carbon.

15. The method for manufacturing a filter for air cleaning according to any of claims 9 to 14, wherein said filtrating material is formed in a wavy shape.

16. The method for manufacturing a filter for air cleaning according to any of claims 9 to 15, wherein H₂NCH₂CH₂NH₂ group is provided to said graft copolymer as a side chain of said graft copolymer.

17. The method for manufacturing a filter for air cleaning according to any of claims 9 to 16, wherein said filter is a filter for air cleaning used for an air conditioning system for vehicles.

## Patentansprüche

1. Filter zur Luftreinigung, umfassend ein filtrierendes Material, in dem ein Adsorbens durch einen Binder an einem Basismaterial fixiert ist, wobei ein Pfropfcopolymer in dem Binder enthalten ist, derart dass
Kohlenwasserstoffverbindungen in der zu behandelnden Luft von dem Adsorbens adsorbiert werden können und der Filter durch das Pfropfcopolymer Ammoniak oder Aldehydgruppen in der zu behandelnden Luft abbauen kann, und wobei das Pfropfcopolymer in dem Binder mit einem Gehalt im Bereich von 1 Gew.-% bis 40 Gew.-% im Verhältnis zu dem Adsorbens enthalten ist.

2. Filter zur Luftreinigung gemäß Anspruch 1, wobei das Adsorbens in einer Menge im Bereich von 10 g/m² bis 300 g/m² an dem Basismaterial fixiert ist.

3. Filter zur Luftreinigung gemäß irgendeinem der vorhergehenden Ansprüche, wobei das Adsorbens eine Aktivkohle ist.

4. Filter zur Luftreinigung gemäß irgendeinem der vorhergehenden der vorhergehenden Ansprüche, wobei das Basismaterial ein Vliesstoff ist.

5. Filter zur Luftreinigung gemäß Anspruch 4, wobei der Vliesstoff durch chemische Bindung hergestellt ist.

6. Filter zur Luftreinigung gemäß irgendeinem der vorhergehenden Ansprüche, wobei das filtrierende Material in gewellter Form hergestellt ist.

7. Filter zur Luftreinigung gemäß irgendeinem der vorhergehenden Ansprüche, wobei das Pfropfcopolymer eine H₂NCH₂CH₂NH₂-Gruppe als Seitenkette des Pfropfcopolymers enthält.

8. Filter zur Luftreinigung gemäß irgendeinem der vorhergehenden Ansprüche, wobei der Filter ein Filter zur Luftreinigung ist, der für ein Klimatisierungssystem von Fahrzeugen verwendet wird.

9. Verfahren zur Herstellung eines Filters zur Luftreinigung, der ein filtrierendes Material umfaßt, das durch die Fixierung eines Adsorbens an ein Basismaterial mittels eines Binders hergestellt wird, wobei, nachdem ein Pfropfcopolymer, das Ammoniak oder Aldehydgruppen in der zu behandelnden Luft abbauen kann, in dem Binder enthalten ist, das Adsorbens an dem Basismaterial fixiert wird unter Verwendung des Binders, der das Pfropfcopolymer enthält, und wobei das Pfropfcopolymer in dem Binder in einer Menge im Bereich von 1 Gew.-% bis 40 Gew.-% im Verhältnis zu dem Adsorbens enthalten ist.

10. Verfahren zur Herstellung eines Filters zur Luftreinigung gemäß Anspruch 9, wobei das Adsorbens an dem Basismaterial in einer Menge im Bereich von 10 g/m² bis 300 g/m² fixiert ist.

11. Verfahren zur Herstellung eines Filters zur Luftreinigung gemäß Anspruch 9 oder 10, wobei das Adsorbens eine Aktivkohle ist.

12. Verfahren zur Herstellung eines Filters zur Luftreinigung gemäß irgendeinem der Ansprüche 9 bis 11, wobei das Basismaterial ein Vliesstoff ist.

13. Verfahren zur Herstellung eines Filters zur Luftreinigung gemäß Anspruch 12, wobei eine als das Adsorbens bereitgestellte Aktivkohle an den Vliesstoff, der als das Basismaterial bereitgestellt wird, über einen Schritt fixiert wird, der das Einweichen eines mit der Aktivkohle gemischten Vlieses in dem Binder umfasst, der das Pfropfcopolymer enthält.

14. Verfahren zur Herstellung eines Filters zur Luftreinigung gemäß Anspruch 12, wobei eine als das Adsorbens bereitgestellte Aktivkohle an den Vliesstoff, der als das Basismaterial bereitgestellt wird, über einen Schritt fixiert wird, der das Anbringen des Binders, der das Propfcopolymer enthält, an ein mit der Aktivkohle gemischten Vlies umfasst.

15. Verfahren zur Herstellung eines Filters zur Luftreinigung gemäß irgendeinem der Ansprüche 9 bis 14, wobei das filtrierende Material in gewellter Form hergestellt wird.

16. Verfahren zur Herstellung eines Filters zur Luftreinigung gemäß irgendeinem der Ansprüche 9 bis 15, wobei eine H₂NCH₂CH₂NH₂-Gruppe dem Pfropfcopolymer als Seitenkette des Pfropfcopolymers bereitgestellt wird.

17. Verfahren zur Herstellung eines Filters zur Luftreinigung gemäß irgendeinem der Ansprüche 9 bis 16, wobei der Filter ein Filter zur Luftreinigung ist, der für ein Klimatisierungssystem von Fahrzeugen verwendet wird.

## Revendications

1. Filtre d'épuration d'air comportant un matériau filtrant dans lequel un agent adsorbant est fixé un sur un matériau de base avec un liant,
dans lequel
un copolymère greffé est contenu dans le liant de façon que des composés d'hydrocarbures présents dans l'air à traiter, puissent être adsorbés par l'agent adsorbant, et que le filtre puisse décomposer les groupes ammorium ou aldéhyde présente dans l'air à traiter grâce au copolymère greffé, et
le copolymère greffé est contenu dans le liant en quantité de l'ordre de 1 % pondéral à 40 % pondéraux par rapport à l'agent adsorbant.

2. Filtre d'épuration d'air selon la revendication 1,
dans lequel
l'agent adsorbant est fixé au matériau de base en quantité de l'ordre de 10 g/m² à 300 g/m².

3. Filtre d'épuration d'air selon l'une des revendications précédentes,
dans lequel
l'agent adsorbant est du charbon actif.

4. Filtre d'épuration d'air selon l'une des revendications précédentes,
dans lequel
le matériau de base est une étoffe non tissée.

5. Filtre d'épuration d'air selon la revendication 4,
dans lequel
l'étoffe non tissée est fabriquée par liaison chimique.

6. Filtre d'épuration d'air selon l'une des revendications précédentes,
dans lequel
le matériau filtrant est sous forme ondulée.

7. Filtre d'épuration d'air selon l'une des revendications précédentes,
dans lequel
le copolymère greffé contient le groupe H₂NCH₂CH₂NH₂ comme chaîne latérale.

8. Filtre d'épuration d'air selon l'une des revendications précédentes,
dans lequel
le filtre est un filtre d'épuration d'air utilisé dans un système de conditionnement d'air de véhicules.

9. Procédé de fabrication d'un filtre d'épuration d'air comportant un matériau filtrant obtenu en fixant un agent adsorbant sur un matériau de base avec un liant,
selon lequel
après qu'un copolymère greffé permettant de décomposer les groupes ammorium ou aldéhyde dans de l'air à traiter ait été introduit dans le liant, l'agent adsorbant est fixé au matériau de base en utilisant le liant contenant le copolymère greffé, et
le copolymère greffé est introduit dans le liant en quantité de l'ordre de 1 % pondéral à 40 % pondéraux par rapport à l'agent adsorbant.

10. Procédé de fabrication d'un filtre d'épuration d'air conforme à la revendication 9,
selon lequel
l'agent adsorbant est fixé au matériau de base en quantité de l'ordre de 10 g/m² à 300 g/m².

11. Procédé de fabrication d'un filtre d'épuration d'air conforme à la revendication 9 ou 10,
selon lequel
l'agent adsorbant est du charbon actif.

12. Procédé de fabrication d'un filtre d'épuration d'air conforme à l'une des revendications 9 à 11,
selon lequel
le matériau de base est une étoffe non tissée.

13. Procédé de fabrication d'un filtre d'épuration d'air conforme à la revendication 12,
selon lequel
le charbon actif mis en oeuvre comme agent adsorbant, est fixé à l'étoffe non tissée mise en oeuvre comme matériau de base par une étape d'imprégnation d'une nappe mélangée au charbon actif avec le liant contenant le copolymère greffé.

14. Procédé de fabrication d'un filtre d'épuration d'air conforme à la revendication 12,
selon lequel
le charbon actif mise en oeuvre comme agent adsorbant est fixé à l'étoffe non tissé mise en oeuvre comme matériau de base par une étape d'application du liant contenant le copolymère greffé sur une nappe mélangée au charbon actif.

15. Procédé de fabrication d'un filtre d'épuration d'air conforme à l'une des revendications 9 à 14,
selon lequel
le matériau a une forme ondulée.

16. Procédé de fabrication d'un filtre d'épuration d'air conforme à l'une des revendications 9 à 15,
selon lequel
un groupe H₂NCH₂CH₂NH₂ est fixé sur le copolymère greffé comme chaîne latérale.

17. Procédé de fabrication d'un filtre d'épuration d'air conforme à l'une des revendications 9 à 16,
selon lequel
le filtre est un filtre d'épuration d'air utilisé dans un système de conditionnement d'air de véhicules.
